# EUROPÄISCHE PATENTSCHRIFT

(11) **EP 2 368 304 B1**
(45) Veröffentlichungstag und Bekanntmachung des Hinweises auf die Patenterteilung: **29.07.2015**
(21) Anmeldenummer: 09828414.4
(22) Anmeldetag: 21.12.2009
(51) Int. Cl.: H02J 7/00

(54) **ENERGIESPEICHERANORDNUNG UND VERFAHREN ZUM BETRIEB EINER DERARTIGEN ANORDNUNG**
ENERGY STORAGE ASSEMBLY AND METHOD FOR OPERATING SUCH AN ASSEMBLY
DISPOSITIF DE STOCKAGE D'ÉNERGIE ET PROCÉDÉ POUR FAIRE FONCTIONNER UN TEL DISPOSITIF

(30) Priorität: 22.12.2008 AT 19992008
(43) Veröffentlichungstag der Anmeldung: 28.09.2011
(73) Patentinhaber: Schoeller Logistics Technologies Holding GmbH, 82049 Pullach (DE)
(72) Erfinder: DELLANTONI, Nikolaus, A-2500 Sooß (AT); HARJUNG, Johann, A-1210 Wien (AT); MESCHIK, Martin, A-1110 Wien (AT); POHL, Alfred, A-2130 Mistelbach (AT)
(74) Vertreter: Leske, Thomas
(86) Internationale Anmeldenummer: PCT/EP2009/009173
(87) Internationale Veröffentlichungsnummer: WO 2010/088944

(56) Entgegenhaltungen:
- EP-A1- 1 332 924
- DE-A1- 10 354 874
- US-A1- 2003 141 843
- US-A1- 2005 077 879
- US-A1- 2005 140 335
- US-B1- 6 608 470

## Beschreibung

Die Erfindung betrifft eine Energiespeicheranordnung mit mehreren in Serie geschalteten Zellen, wobei die Serienschaltung der Zellen mit einem Leistungsausgang der Energiespeicheranordnung verbunden ist und mit einer Steuereinheit, sowie ein Verfahren zum Betrieb einer derartigen Anordnung.

Hochleistungs-Akkumulatoren, wie sie beispielsweise in Elektrofahrzeugen als Energiespeicher eingesetzt werden, umfassen üblicherweise die Zusammenschaltung einer Vielzahl galvanischer Zellen um so die Anforderungen an den Energiespeicher hinsichtlich Versorgungsspannung, Leistung und Kapazität zu erfüllen.

Als Basistechnologie für die galvanischen Zellen stehen unterschiedliche elektrochemische Verfahren zur Verfügung die nach den verwendeten Materialen bezeichnet werden. Dazu zählen insbesondere die Lithium-Ionen -, Lithium-Polymer-,die Nickel-Metallhydrid-, oder die Lithium-Eisen-Phosphat-Techniken.

Gemeinsam ist allen verfügbaren Techniken, dass an sich gleichartige Zellen mit gleichem Betriebsalter beispielsweise aufgrund von Produktionstoleranzen, Temperatur-, oder mechanischen Einflüssen geringfügig unterschiedliche Eigenschaften aufweisen.

Dadurch weisen sie unterschiedliche Lade- und Entladecharakteristiken auf, was dazu führt, dass einzelne Zellen stärker beansprucht und damit frühzeitig zerstört werden, wodurch wiederum der gesamte Akkumulator ausfällt.

Aus der DE10345306A1, ist eine Vorrichtung zum Laden und Überwachen einer Fahrzeugbatterie mit Einzelzellenabgriff bekannt, bei der ein Teil der Einzelzellen mit einer höheren Spannung geladen werden kann und die Einzelzellen während des Entladevorganges individuell überwacht werden.

Aus der DE 10 2008 005 208 Al, ist eine Ausgleichsanordnung bekannt, welche zwischen den Zellen angeordnete Schalter umfasst, mit denen die Zellen in einer Normal- oder einer Ausgleichskonfiguration zusammengefasst werden können. In der Ausgleichskonfiguration erfolgt vor einem Aufladevorgang ein kontrollierter Ladungsausgleich zwischen den Zellen.

Die DE 10 2006 022 394 beschreibt eine Vorrichtung zum Ladungsabgleich einer Energiequelle mit mehreren Zellen, bei der die Abweichung einer einzelnen Zellenspannung von einem variablen Referenzwert, insbesondere einem Spannungsmittelwert aller Zellen, überwacht wird und gegebenenfalls ein Entladevorgang ausgelöst wird.

Der vorliegenden Erfindung liegt die Aufgabe zugrunde, eine Energiespeicheranordnung der eingangs erwähnten Art mit verbesserten Eigenschaften anzugeben.

Erfindungsgemäß geschieht dies mit einer Energiespeicheranordnung nach dem Oberbegriff des Anspruchs 1, bei der zumindest ein Teil der in Serie geschalteten Zellen über jeweils parallel geschaltete potenzialfreie geregelte Wandler- und Kontrolleinheiten mit dem Leistungsausgang und der Steuereinheit in der Weise verbunden ist, dass mittels gezielter Stromentnahmen durch die Wandler- und Kontrolleinheiten jede der Zellen während der Lade-, Entlade- und Umladevorgänge entsprechend den individuellen Leistungsmerkmalen dieser Zelle betrieben wird und ein an dem Leistungsausgang der Energiespeicheranordnung fließender Gesamtstrom durch einen durch die Serienschaltung der Zellen fließenden Basisstrom sowie durch Zusatzströme gebildet ist, die den einzelnen Zellen in Abhängigkeit von deren Leistungsfähigkeit entnommen werden.

Die erfindungsgemäße Energiespeicheranordnung ermöglicht den Einsatz von Zellen mit unterschiedlichen elektrischen Eigenschaften, sodass beim Herstellungsprozess ein aufwändiges Selektionsverfahren entfällt. Darüber hinaus wird auch der Austausch von defekten Zellen ermöglicht. Dies ist bei herkömmlichen Akkumulatoren wenig zweckmäßig, da die neu hinzugefügten Zellen im allgemeinen andere elektrische Eigenschaften aufweisen, als die bereits vorhandenen. Dieser Austausch kann bei Bedarf auch im laufenden Betrieb erfolgen, ohne dass die Energiespeicheranordnung von der Last getrennt werden muß.

Vorteilhaft ist es, wenn die potenzialfreien Wandler- und Kontrolleinheiten Schaltwandler umfassen.

Ein wesentlicher Vorteil der vorliegenden Erfindung besteht darin, dass die Zellen zumindest teilweise auf unterschiedlichen Basistechnologien beruhen können. Die Basistechnologien weisen unterschiedliche Vor- und Nachteile auf. Durch Kombination von Zellen unterschiedlichen Typs können Energiespeicheranordnungen mit optimierten Eigenschaften erhalten werden. Wesentliche Vorteile bringt die erfindungsgemäße Lösung auch für die sogenannten Second-Life-Konzepte, bei denen beispielsweise Lithium-Ionen-Akkumulatoren nach Ende ihres Einsatzes in Fahrzeugen für andere Zwecke wie beispielsweise als Energiespeicher für Foto-Voltaikanlagen verwendet werden.

Nach einer vorteilhaften Ausgestaltung der Erfindung ist jeweils einer Gruppe von gleichartigen Zellen eine Wandler- und Kontrolleinheit zugeordnet.

Für bestimmte Anwendungsfälle wird es zweckmäßig sein, nicht jeder einzelnen Zelle eine Wandler- und Kontrolleinheit zuzuordnen, sondern nur jeweils einer Gruppe von gleichartigen Zellen.

Vorteilhaft ist auch ein modularer Aufbau der Energiespeicheranordnung in der Weise, dass jede potenzialfreie geregelte Wandler- und Kontrolleinheit mit der jeweils zugehörigen Zelle oder Gruppe von Zellen eine konstruktive Einheit, ein Zellmodul, bildet, welches über lösbare Verbindungselemente elektrisch und mechanisch mit der Energiespeicheranordnung verbunden ist. Die Verbindungselemente der Zellmodule sind günstigerweise lösbare Verbindungen, zweckmäßigerweise als Steckverbinder ausgestaltet.

Dieser erfindungsgemäße Aufbau ermöglicht die flexible Kombination von Zellmodulen zu Energiespeicheranordnungen, je nach den geforderten elektrischen Leistungsdaten des jeweiligen Einsatzgebietes. Darüber hinaus können auf einfache Weise in einer Initialisierungsphase die individuellen Eigenschaften der Zellen ermittelt werden und die Zellmodule auch beliebig ausgetauscht werden. Dazu ist es auch denkbar, die Energiespeicheranordnung in genormte Baugruppenträger, wie beispielsweise die sogenannten "19 Zoll Racks" einzubauen, wobei die Rückseite des Baugruppenträgers, die sogenannte Backplane, mehrere Steckplätze für Einschub-Baugruppen, im vorliegenden Fall also für die Steuereinheit und die Zellmodule, aufweist. Die Backplane trägt die Steckverbinder für die Einschub-Baugruppen und verbindet sie elektrisch.

Die umfangreichen Informationen über die Zelleigenschaften können für eine Analyse der spezifischen Eigenschaften der Zelle sowie deren Veränderungen genutzt werden.

Damit können beispielsweise mögliche Zelldefekte, wie sie insbesondere bei Lithium-Batterien erkennbar sind, frühzeitig erkannt werden und über die Verbindungselemente BMS-V, sowie die Steuereinheit BMS-C an externe Geräte signalisiert werden.

Insbesondere kann auch das bei Lithium-Ionen-Akkumulatoren gefürchtete thermische Durchgehen (Thermal Runaway) erkannt und verhindert werden.

Darüber hinaus sind auf der Basis der ermittelten Parameter präzise Aussagen über die Restkapazität der Energiespeicheranordnung und bei Einsatz in einem Elektrofahrzeug genaue Angaben über die verbleibende Reichweite möglich.

Die der vorliegenden Anmeldung zugrundeliegende Aufgabe wird auch gelöst mit einem Verfahren zum Betrieb einer Energiespeicheranordnung nach einem der Ansprüche 1 bis 6, bei dem
- in einer Initialisierungsphase die individuellen Eigenschaften der Zellen ermittelt werden und bei dem
- während der Lade-, Entlade- und Umladevorgänge der aktuelle Zustand der Zellen laufend überprüft wird und bei dem
- auf der Grundlage der Leistungsfähigkeit der elektrisch schwächsten Zelle ein Basisstrom für die serielle Schaltung der Zellen ermittelt wird und bei dem
- durch entsprechende Ansteuerung der Wandler- und Kontrolleinheiten die Differenz zwischen dem Basisstrom und dem am Leistungsausgang der Energiespeicheranordnung fließenden Gesamtstrom durch individuelle Belastung einzelner Zellen in Abhängigkeit von deren Leistungsfähigkeit bereitgestellt wird.

Die Erfindung wird anhand eines in den Figuren dargestellten Ausführungsbeispieles näher erläutert.

Es zeigen beispielhaft:
Fig. 1 ein Blockbild der Gesamtanordnung und
Fig. 2 eine Abbildung der Wandler- und Kontrollein heit.

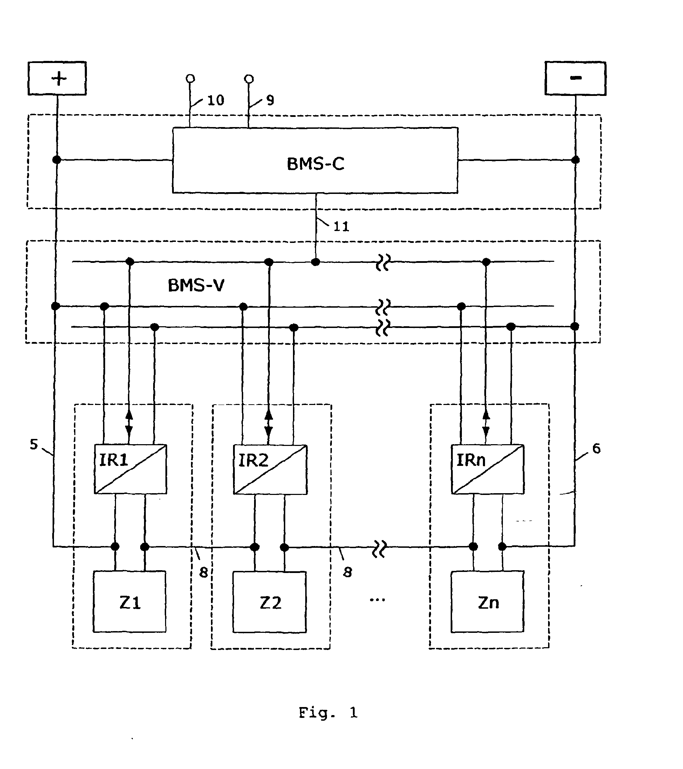

Die erfindungsgemäße Energiespeicheranordnung gemäß Fig. 1 umfasst neben einer Vielzahl von galvanischen Zellen Z1, Z2,...Zn eine Steuereinheit BMS-C, eine Verbindungseinheit BMS-V, sowie für jede der galvanischen Zellen Z1 Z2,...Zn eine jeweils zugeordnete Wandler- und Kontrolleinheit IR1, IR2,...IRn. Die galvanischen Zellen Z1, Z2,...Zn sind über Verbindungsleitungen 8 in Serie geschaltet, um die für die Energiespeicheranordnung gewünschte Spannung zu erhalten, welche am Ausgang 5, 6 der Energiespeicheranordnung zur Versorgung einer Last anliegt.

Die Steuereinheit BMS-C ist über eine Datenverbindung 11 mit den Wandler- und Kontrolleinheiten IR1, IR2, ...IRn verbunden. Über einen Systembus 9 ist ein Datenaustausch der Steuereinheit BMS-C darüber hinaus mit weiteren Systemen, wie beispielsweise einer Fahrzeugsteuerung, oder einem Ladegerät möglich.

Mit einer - optionalen - Diagnoseschnittstelle 10 kann die Konfiguration und die Überwachung der Steuereinheit BMS-C bzw der Energiespeicheranordnung erfolgen.

Ober die Verbindungseinheit BMS-V sind einerseits die Ausgänge der Wandler- und Kontrolleinheiten IR1, IR2,...IRn untereinander und mit dem Pluspol 5 und Minuspol 6 der Energiespeicheranordnung, und andererseits die Datenleitungen der Wandler- und Kontrolleinheiten IR1, IR2,...IRn mit der Datenverbindung 11 der Steuereinheit BMS-C verbunden.

Der Verzicht auf Schalter in der Verbindungseinheit BMS-V ermöglicht es, störanfällige und im Falle von Leistungsschaltern teure Elemente zu vermeiden. Halbleiterschalter sind zwar wartungsfrei, im Allgemeinen bei großen Strömen aber teuer.

Bei einem Einbau der Energiespeicheranordnung in genormte Baugruppenträger, wie beispielsweise die sogenannten "19 Zoll Racks", wird die Verbindungseinheit BMS-V von der Rückseite des Baugruppenträgers, der sogenannten Backplane gebildet, welche mehrere Steckplätze für Einschub-Baugruppen, im vorliegenden Fall also für die Steuereinheit und die Zellmodule, aufweist. Die Backplane trägt die Steckverbinder für die Einschub-Baugruppen und verbindet sie elektrisch.

Die Funktion der erfindungsgemäßen Energiespeicheranordnung ist wie folgt:
Im typischen Auslieferungszustand ist eine fabriksneue Energiespeicheranordnung teilweise geladen.

Jede der Wandler- und Kontrolleinheiten IR1, IR2,...IRn besitzt aus dem Initialisierungsprozess Informationen über wesentliche Parameter der zugeordneten Zelle oder Zellgruppe, wie beispielsweise die Zellentype, die maximale Ladeschluss-Spannung, die minimale Entladespannung, die Nennladung (Kapazität), Impedanz, etc.

In vorteilhafter Weise werden die Wandler- und Kontrolleinheiten IR1, IR2,...IRn mit den jeweils zugeordneten galvanischen Zellen Z1, Z2,...Zn oder Gruppen von Zellen als konstruktive Einheit, d.h. als Zellmodule hergestellt, welche über Stecker elektrisch und mechanisch mit der Akkumulatoreinheit verbunden sind.

In diesem Fall erfolgt die erstmalige Erfassung der Zellparameter durch die Wandler- und Kontrolleinheiten IR1, IR2,...IRn bereits vor der Montage zu einer Energiespeicheranordnung. Diese können daher nach der Montage unmittelbar an die Steuereinheit BMS-C weitergegeben werden. Voraussetzung dafür ist ein nichtflüchtiger Datenspeicher in den Wandler- und Kontrolleinheiten IR1, IR2,...IRn.

Auf Basis dieser Informationen, sowie des laufend überwachten Ladezustandes jeder der galvanischen Zellen Z1, Z2,...Zn und des am Leistungsausgang fließenden Gesamtstromes ermittelt die Steuereinheit BMS-C optimale Werte für den durch die Serienschaltung der Zellen fließenden Basisstrom sowie für die den einzelnen Zellen Z1, Z2,...Zn in Abhängigkeit von derer Leistungsfähigkeit zu entnehmenden Zusatzströme.

In der Folge wird der Entladevorgang je Zelle durch die Wandler- und Kontrolleinheiten IR1, IR2,...IRn individuell gesteuert um so die ermittelten Werte für Basisstrom und Zusatzströme zu erreichen.

Dadurch, dass der Basisstrom vergleichsweise groß im Verhältnis zu den Zusatzströmen ist, können große und damit teure Wandlereinheiten vermieden werden.

Bei einem Gesamtstrom der Energiespeicheranordnung von z.B. 50 Ampere wird die Serienschaltung der Zellen Z1, Z2,...Zn mit z.B. 48 Ampere Basisstrom belastet. Die restlichen 2 Ampere Zusatzstrom werden von den Wandler- und Kontrolleinheiten IR1, IR2,...IRn durch individuelle Belastung der leitungsfähigeren Zellen geliefert.

Der Stromfluss durch die jeweils schwächste Zelle beispielsweise die erste Zelle Z1 beträgt daher 48 Ampere, während die stärkste Zelle, beispielsweise die zweite Zelle Z2 mit einem Strom von 52 Ampere, d.h. dem Basisstrom von 48 Ampere und einem Zusatzstrom von 4 Ampere durch die zugeordnete zweite Wandler- und Kontrolleinheit IR2 belastet wird. Dieser zusätzliche Strom von 4 Ampere wird durch die zweite Wandler- und Kontrolleinheit IR2 auf das Spannungsniveau der Ausgangsspannung der Energiespeicheranordnung umgesetzt, sein Beitrag zum Gesamtstrom erniedrigt sich daher um das Verhältnis der Ausgangsspannung zur Zellenspannung und um vergleichsweise geringe Verluste im Wandler. Analog dazu liefern weitere Zellen Z3,...Zn über die ihnen jeweils zugeordneten Wandler- und Kontrolleinheiten IR3,...IRn entsprechend ihrer Leistungsfähigkeit ihren Beitrag zum Gesamtstrom.

Die Steuerung der zusätzlichen Stromentnahmen erfolgt dynamisch, d.h. abhängig vom Verlauf der Parameter der einzelnen Zellen. Das Verhältnis von Basisstrom zu den Zusatzströmen wird sich daher in Abhängigkeit des Verlaufes der Entladung der einzelnen Zellen ändern. Dies kann bei einem kompletten Ausfall einer Zelle so weit führen, dass der Betrag des Basisstromes gegen Null geht und vollständig von der Summe der Zusatzströme der intakten Zellen ersetzt wird.

Bei einem Ladevorgang wird hingegen durch die Steuereinheit BMS-C festgestellt, wenn sich die Spannung einer der Zellen Z1, Z2,...Zn der zellenindividuellen Ladeschlussspannung annähert. In diesem Fall wird die jeweils zugeordnete Wandler- und Kontrolleinheit IR1, IR2,...IRn dazu veranlasst, die dann überschüssige Energie aus dieser Zelle in das Gesamtsystem zurückzuführen. In diesem Fall wird also ein zusätzlicher Stromfluss von der jeweiligen Zelle, beispielsweise die n-te Zelle Zn, über die zugeordnete n-te Wandler- und Kontrolleinheit IRn in die Serienschaltung der weiteren Zellen Z1, Z2,...Zn-1 erzwungen, sodass sich die gesamte Leistungsaufnahme der Energiespeicheranordnung, also der in diesem Fall aufgenommene Gesamtstrom um diesen Zusatzstrom reduziert, wodurch auch der Ladevorgang effizienter gestaltet werden kann. Mit Fortdauer des Ladevorganges werden immer mehr Zellen Z1, Z2,...Zn ihre individuellen Ladeschlussspannungen erreichen und die überschüssige Ladung als zusätzlichen Stromfluss über die zugeordneten Wandler- und Kontrolleinheiten IR1, IR2,...IRn in das Gesamtsystem einspeisen, sodass die Leistungsaufnahme des Gesamtsystems in diesem Fall deutlich geringer sein wird.

Im Ruhezustand der Energiespeicheranordnung, d.h. wenn weder ein aktiver Lade- oder Entladevorgang geschieht, kommt es in Anhängigkeit vom Typ der Zelle zu einer sogenannten Selbstentladung. Diese ist ebenfalls von Zelle zu Zelle verschieden und kann bei vollständiger Entleerung zu einer Zerstörung der Zelle Z1, Z2,...Zn führen.

Erfindungsgemäß wird nun im Ruhezustand der Energiespeicheranordnung ein Umladevorgang durchgeführt.

Dies geschieht in der Weise, dass aus den leistungsfähigeren Zellen ein Stromfluss über die zugeordneten Wandler- und Kontrolleinheiten IR1, IR2,...IRn in die serielle Schaltung der Zellen erzwungen wird, die Gesamtanordnung somit geladen und damit eine frühzeitige Entladung und Zerstörung der schwächeren Zellen verhindert wird.

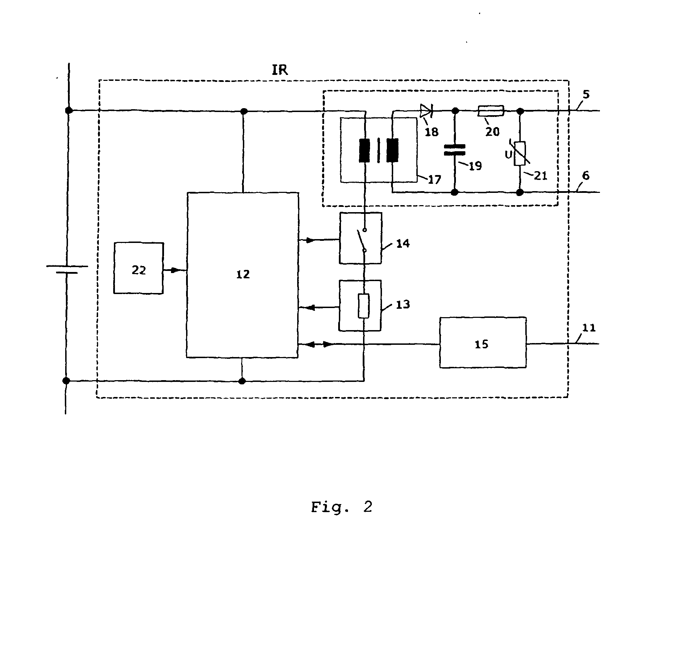

Der Aufbau einer erfindungsgemäßen Wandler- und Kontrolleinheit IR1, IR2,...IRn, die eingangsseitig mit der jeweils zugeordneten Zelle und ausgangsseitig mit dem Leistungsausgang der Energiespeicheranordnung verbunden ist, wird anhand der Fig. 2 beschrieben.

Jede Wandler- und Kontrolleinheit IR1, IR2,...IRn umfasst ein Kontrollelement 12, eine Potenzialtrennstufe bestehend aus einem Transformator 17, einem Gleichrichter 18, einem Siebkondensator 19, einer Sicherung 20, die als reversible Sicherung ausgeführt sein kann, und einer überspannungs-Begrenzungseinheit 21.

Weiterhin sind ein Schaltelement 14 zur Umwandlung der Zellengleichspannung in eine Wechselspannung, ein Stromfühler 13, eine Sensoreinheit 22 für Temperatur und andere wesentliche Akkuparameter und eine Kommunikationseinheit 15 zur Verbindung der Kontrolleinheit mit der Datenschnittstelle 11 zur Steuereinheit BMS-C vorgesehen.

Das Schaltelement 14 bildet gemeinsam mit Transformator 17, Gleichrichter 18, dem Siebkondensator 19 und der Sicherung 20 einen Schaltwandler, mit dem die Gleichspannung der Zelle in eine Wechselspannung umgewandelt, auf die Höhe der Ausgangsspannung der Energiespeicheranordnung transformiert und danach gleichgerichtet wird.

Der Betrag des aus der Zelle entnommenen Stromes wird durch Pulsweitenmodulation des Schaltelementes 14 bestimmt. Die Steuerung des Schaltelementes 14 in Abhängigkeit von den entsprechenden Vorgaben durch die Steuereinheit BMS-C erfolgt durch das Kontrollelement 12. Gemessen wird der der Zelle entnommene Zusatzstrom mittels Stromfühler 13.

Für die Dimensionierung der Wandler- und Kontrolleinheit IR1, IR2,...IRn ist folgende Überlegung maßgeblich:

Es muß die Leistung übertragen werden können, die im Extremfall durch eine einzelne Zelle auszugleichen ist. Hat die Energiespeicheranordnung also z.B. 20 Zellen Z1, Z2,...Zn und soll der vollständige Ausfall einer Zelle ausgeglichen werden können, so muss der Wandler also etwa 5% der Nennleistung der Einzelzelle übertragen können, da ja die übrigen, funktionsfähigen 19 Zellen ihren Beitrag liefern. Bei n Zellen ist dieser Faktor 1/(n-1).

Zur Kompensation des vollständigen Ausfalles mehrerer Zellen ist eine entsprechende leistungsfähigere Gestaltung der Wandlereinheiten notwendig.

Die Information über den Zustand der jeweiligen Zelle wird mittels der Sensoren 22 zur Messungen der Zellenparameter Temperatur, Spannung und Strom erhalten, welche mittels Kontrolleinheit 12 angesteuert werden. Die Kontrolleinheit 12 speichert die entsprechenden Werte und leitet sie an die Steuereinheit BMS-C weiter.

Dazu bedient sie sich einer Kommunikationseinheit 15 die im einfachsten Fall als Schnittstellenanpassung mit Potenzialtrennung ausgeführt sein kann und der Angleichung der Signalspannungen zwischen Kontrolleinheit 12 und der Steuereinheit BMS-C dient.

Ihre besonderen Vorteile entfaltet die erfindungsgemäße Anordnung dann, wenn Zellen Z1, Z2,...Zn unterschiedlicher Technologie zum Einsatz kommen. So ist sie für die Kombination von Zellen für niedrigere Dauerlast mit Zellen für höhere Kurzzeitlast geeignet. Ebenso günstig ist die Anordnung im Entladefall für die Kombination von Primärzellen und von Energiewandlern wie z.B. Brennstoffzellen, die durch individuelle Parameter wie Gaszufuhr, Oberflächeneigenschaften der Elektroden, etc. unterschiedliche Leistungseigenschaften haben.

Durch Vergleich der aktuellen Zellenparameter, wie z.B. Temperatur, Spannung und Strom, mit gespeicherten älteren Messwerten und Auswertung der Veränderungen ist eine Analyse der spezifischen Eigenschaften der Zelle sowie deren Veränderungen möglich.

Damit können beispielsweise mögliche Zelldefekte, wie sie insbesondere bei Lithium-Batterien erkennbar sind, frühzeitig erkannt werden und über die Verbindungselemente BMS-V, sowie die Steuereinheit BMS-C an externe Geräte signalisiert werden.

Insbesondere kann auch das bei Lithium-Ionen-Akkumulatoren gefürchtete thermische Durchgehen (Thermal Runaway) erkannt und verhindert werden. Dieses wird als Ursache für die in jüngerer Zeit verstärkt aufgetretenen Brände bei Laptop-Akkus verantwortlich gemacht.

Es kann vorteilhaft sein, die Wandler- und Kontrolleinheiten IR1, IR2,...IRn aus räumlich getrennten Komponenten aufzubauen, sodass lediglich ein Speicher für die Zellendaten mit der Zelle eine konstruktive Einheit bildet, während die übrigen Komponenten der Wandler- und Kontrolleinheiten IR1, IR2,...IRn an der Rückwand der Energiespeicher-anordnung, der sogenannten Backplane angebracht sind.

Wie bereits ausgeführt, ermöglicht die erfindungsgemäße Lösung den Betrieb einer Energiespeicheranordnung auch bei Ausfall einzelner Zellen. Diese Eigenschaft kann auch dazu genutzt werden, den ungestörten Betrieb einer Energiespeicheranordnung während des Austausches einzelner Zellen dadurch zu ermöglichen, dass während des Austauschs einer Zelle der Betrag des Basisstromes gegen Null gesteuert wird, und vollständig von der Summe der Zusatzströme der übrigen Zellen ersetzt wird.

Die präzise Kenntnis der Zelleneigenschaften kann auch zu einer sehr genauen Bestimmung der Restkapazität der Energiespeicheranordnung genutzt werden. In Verbindung mit einem Fahrzeug kann dadurch sehr genau die noch zurücklegbare Fahrstrecke bestimmt werden.

## Patentansprüche

1. Energiespeicheranordnung mit mehreren in Serie geschalteten Zellen, wobei die Serienschaltung der Zellen mit einem Leistungsausgang der Energiespeicheranordnung verbunden ist und mit einer Steuereinheit, wobei zumindest ein Teil der in Serie geschalteten Zellen (Z1, Z2,...Zn) über jeweils parallel geschaltete potenzialfreie geregelte Wandler- und Kontrolleinheiten (IR1, IR2,...IRn) mit dem Leistungsausgang (5,6) und der Steuereinheit (BMS-C) in der Weise verbunden ist, dass mittels gezielter Stromentnahmen durch die Wandler- und Kontrolleinheiten (IR1, IR2,...IRn) jede der Zellen (Z1, Z2,...Zn) während der Lade-, Entlade- und Umladevorgänge entsprechend den individuellen Leistungsmerkmalen dieser Zelle (Z1, Z2,...Zn) betrieben wird und ein an dem Leistungsausgang der Energiespeicheranordnung (5, 6) fließender Gesamtstrom durch einen durch die Serienschaltung der Zellen (Z1, Z2,...Zn) fließenden Basisstrom sowie durch Zusatzströme gebildet ist, die den einzelnen Zellen (Z1, Z2,...Zn) in Abhängigkeit von derer Leistungsfähigkeit entnommen werden, **dadurch gekennseichnet, dass** bei einem Ladevorgang mittels Steuereinheit (BMS-C) festgestellt wird, wenn sich die Spannung einer der Zellen (Z1, Z2,...Zn) einer zellenindividuellen Ladeschlussspannung annähert und dass diesem Fall die jeweils zugeordnete Wandlerund Kontrolleinheit (IR1, IR2,...IRn) dazu veranlasst wird, die durch den Basisstrom zugeführte, jedoch nach Erreichen der zellenindividuellen Ladeschlussspannung überschüssige Energie an dieser Zelle vorbei zu leiten und in das Gesamtsystem zurückzuführen.

2. Energiespeicheranordnung nach Anspruchl, **dadurch gekennzeichnet, dass** die potenzialfreien geregelte Wandler- und Kontrolleinheiten (IR1, IR2,...IRn) Schaltwandler (14, 17, 18, 19)umfassen.

3. Energiespeicheranordnung nach Anspruchl oder 2, **dadurch gekennzeichnet, dass** die Zellen (Z1, Z2,...Zn) zumindest teilweise auf unterschiedlichen Basistechnologien beruhen.

4. Energiespeicheranordnung nach einem der Ansprüche 1 bis 3, **dadurch gekennzeichnet, dass** jeweils einer Gruppe von gleichartigen Zellen (Z1, Z2,...Zn) eine Wandler- und Kontrolleinheit (IR1, IR2,...IRn) zugeordnet ist.

5. Energiespeicheranordnung nach einem der Ansprüche 1 bis 4, **dadurch gekennzeichnet, dass** jede potenzialfreie geregelte Wandler- und Kontrolleinheit (IR1, IR2,...IRn) mit der jeweils zugehörigen Zelle (Z1, Z2,...Zn) oder Gruppe von Zellen eine konstruktive Einheit bildet, welche über lösbare Verbindungselemente (BMS-V) elektrisch und mechanisch mit der Energiespeicheranordnung verbunden ist.

6. Energiespeicheranordnung nach Anspruch 5, **dadurch gekennzeichnet, dass** als lösbare Verbindungselemente (BMS-V) Steckverbinder vorgesehen sind.

7. Verfahren zum Betrieb einer Energiespeicheranordnung nach einem der Ansprüche 1 bis 6, **dadurch gekennzeichnet, dass**
- in einer Initialisierungsphase die individuellen Eigenschaften der Zellen (Z1, Z2,...Zn) ermittelt werden und dass
- während der Lade-, Entlade- und Umladevorgänge der aktuelle Zustand der Zellen (Z1, Z2,...Zn) laufend überprüft wird und dass
- auf der Grundlage der Leistungsfähigkeit der elektrisch schwächsten Zelle ein Basisstrom für die serielle Schaltung der Zellen (Z1, Z2,...Zn) ermittelt wird und dass
- durch entsprechende Ansteuerung der Wandler- und Kontrolleinheiten (IR1, IR2,...IRn) die Differenz zwischen dem Basisstrom und dem am Leistungsausgang (5, 6) der Energiespeicheranordnung fließenden Gesamtstrom durch individuelle Belastung einzelner Zellen (Z1, Z2,...Zn) in Abhängigkeit von deren Leistungsfähigkeit und vom Leistungsbedarf bereitgestellt wird,
- bei einem Ladevorgang mittels Steuereinheit BMS-C festgestellt wird, wenn sich die Spannung einer der Zellen (Z1, Z2,...Zn) der zellenindividuellen Ladeschlussspannung annähert und
- in diesem Fall die jeweils zugeordnete Wandler- und Kontrolleinheit (IR1, IR2,...IRn) dazu veranlasst wird, die durch den Basisstrom zugeführte, jedoch nach Erreichen der zellenindividuellen Ladeschlussspannung überschüssige Energie an dieser Zelle vorbei zu leiten und in das Gesamtsystem zurückzuführen.

8. Verfahren nach Anspruch 7, **dadurch gekennzeichnet, dass** die während der Lade-, Entlade- und Umladevorgänge ermittelten, aktuellen und individuellen Eigenschaften der Zellen (Z1, Z2,...Zn) mit gespeicherten älteren Werten verglichen werden und daraus Prognosen über den künftigen Zustand der Zellen abgeleitet werden.

9. Verfahren zum Betrieb einer Energiespeicheranordnung nach Anspruch 8, **dadurch gekennzeichnet, dass** die individuellen Eigenschaften der Zellen (Z1, Z2,...Zn) in Hinblick auf das Risiko eines thermischen Durchgehens der Zellen ausgewertet werden.

10. Verfahren zum Betrieb einer Energiespeicheranordnung nach Anspruch 7, **dadurch gekennzeichnet, dass** der Austausch einzelner Zellen (Z1, Z2,...Zn) während des laufenden Betriebes der Energiespeicheranordnung erfolgt.

11. Verfahren zum Betrieb einer Energiespeicheranordnung nach Anspruch 7, **dadurch gekennzeichnet, dass** die während der Lade-, Entlade- und Umladevorgänge ermittelten, aktuellen und individuellen Eigenschaften der Zellen (Z1, Z2,...Zn) zur Ermittlung der elektrischen Restkapazität der Energiespeicheranordnung herangezogen werden.

12. Energiespeicheranordnung nach einem der Ansprüche 1 bis 4, **dadurch gekennzeichnet, dass** jede potenzialfreie geregelte Wandler- und Kontrolleinheit (IR1, IR2,...IRn) eine Speichereinheit aufweist, welche von den übrigen Komponenten der Wandler- und Kontrolleinheit konstruktiv getrennt ist und mit der jeweils zugehörigen Zelle (Z1, Z2,...Zn) oder Gruppe von Zellen eine konstruktive Einheit bildet.

## Claims

1. Energy storage assembly comprising a plurality of cells connected in series, wherein the series connection of the cells is connected to a power output of the energy storage assembly, and comprising a control unit, wherein at least some of the cells (Z1, Z2,...Zn) connected in series are connected to the power output (5, 6) and the control unit (BMS-C) by way of potential-free controlled converter and control units (IR1, IR2,...IRn) respectively connected in parallel, such that, during the charging, discharging and charge-reversing operations, each of the cells (Z1, Z2,...Zn) is operated according to the individual performance characteristics of this cell (Z1, Z2,...Zn) by means of selective current drains by the converter and control units (IR1, IR2,...IRn) and a total current flowing at the power output of the energy storage assembly (5, 6) is formed by a base current flowing through the series connection of the cells (Z1, Z2,...Zn) and by additional currents, which are drained from the individual cells (Z1, Z2,...Zn) depending on their capacity, **characterized in that**, in the case of a charging operation, it is established by means of the control unit (BMS-C) when the voltage of one of the cells (Z1, Z2,...Zn) approaches a cell-individual end-of-charge voltage and **in that**, in this case, the respectively assigned converter and control unit (IR1, IR...IRn) is made to direct the energy that is supplied by the base current but is superfluous once the cell-individual end-of-charge voltage is reached past this cell and return it into the overall system.

2. Energy storage assembly according to Claim 1, **characterized in that** the potential-free controlled converter and control units (IR1, IR2,...IRn) comprise switching converters (14, 17, 18, 19).

3. Energy storage assembly according to Claim 1 or 2, **characterized in that** the cells (Z1, Z2,...Zn) are, at least partly, based on different fundamental technologies.

4. Energy storage assembly according to one of Claims 1 to 3, **characterized in that** a converter and control unit (IR1, IR2,...IRn) is respectively assigned to a group of identical cells (Z1, Z2,...Zn).

5. Energy storage assembly according to one of Claims 1 to 4, **characterized in that** each potential-free controlled converter and control unit (IR1, IR2,...IRn) forms with the respectively associated cell (Z1, Z2,...Zn) or group of cells a structural unit, which is electrically and mechanically connected to the energy storage assembly by way of releasable connecting elements (BMS-V).

6. Energy storage assembly according to Claim 5, **characterized in that** plug-in connectors are provided as releasable connecting elements (BMS-V).

7. Method for operating an energy storage assembly according to one of Claims 1 to 6, **characterized in that**
- in an initialization phase, the individual properties of the cells (Z1, Z2,...Zn) are determined and **in that**
- during the charging, discharging and charge-reversing operations, the current state of the cells (Z1, Z2,...Zn) is continuously checked and **in that**
- on the basis of the capacity of the electrically weakest cell, a base current for the series connection of the cells (Z1, Z2,...Zn) is determined and **in that**
- by corresponding activation of the converter and control units (IR1, IR2,...IRn), the difference between the base current and the total current flowing at the power output (5, 6) of the energy storage assembly is provided by individual loading of individual cells (Z1, Z2,...Zn) depending on their capacity and on the power requirement,
- in the case of a charging operation, it is established by means of the control unit (BMS-C) when the voltage of one of the cells (Z1, Z2,...Zn) approaches the cell-individual end-of-charge voltage and
- in this case, the respectively assigned converter and control unit (IR1, IR...IRn) is made to direct the energy that is supplied by the base current but is superfluous once the cell-individual end-of-charge voltage is reached past this cell and return it into the overall system.

8. Method according to Claim 7, **characterized in that** the current and individual properties of the cells (Z1, Z2,...Zn) determined during the charging, discharging and charge-reversing operations are compared with stored older values and used as a basis for deriving forecasts of the future state of the cells.

9. Method for operating an energy storage assembly according to Claim 8, **characterized in that** the individual properties of the cells (Z1, Z2,...Zn) are evaluated with regard to the risk of a thermal runaway of the cells.

10. Method for operating an energy storage assembly according to Claim 7, **characterized in that** the exchange of individual cells (Z1, Z2,...Zn) is performed during the operation of the energy storage assembly.

11. Method for operating an energy storage assembly according to Claim 7, **characterized in that** the current and individual properties of the cells (Z1, Z2,...Zn) determined during the charging, discharging and charge-reversing operations are used for determining the remaining electrical capacity of the energy storage assembly.

12. Energy storage assembly according to one of Claims 1 to 4, **characterized in that** each potential-free controlled converter and control unit (IR1, IR2,...IRn) has a memory unit, which is structurally separate from the other components of the converter and control unit and forms a structural unit with the respectively associated cell (Z1, Z2,...Zn) or group of cells.

## Revendications

1. Arrangement accumulateur d'énergie comprenant plusieurs cellules branchées en série, le circuit série des cellules étant relié à une sortie de puissance de l'arrangement accumulateur d'énergie, et à une unité de commande, au moins une partie des cellules (Z1, Z2, ... Zn) branchées en série étant reliée à la sortie de puissance (5, 6) et à l'unité de commande (BMS-C), respectivement par le biais d'unités de conversion et de contrôle (IR1, IR2, ... IRn) branchées en parallèle et à régulation libre de potentiel, de telle sorte qu'à l'aide de prélèvements de courant ciblés par les unités de conversion et de contrôle (IR1, IR2, ... IRn), chacune des cellules (Z1, Z2, ... Zn) est exploitée pendant les opérations de charge, de décharge et de transfert de charge conformément aux caractéristiques de puissance individuelles de cette cellule (Z1, Z2, ... Zn) et un courant total qui circule au niveau de la sortie de puissance (5, 6) de l'arrangement accumulateur d'énergie est formé par un courant de base qui circule à travers le circuit série constitué par les cellules (Z1, Z2, ... Zn) ainsi que par un courant supplémentaire, lequel est prélevé des cellules (Z1, Z2, ... Zn) individuelles en fonction de leur capacité de puissance, **caractérisé en ce que**, lors d'une opération de charge, le moment auquel la tension de l'une des cellules (Z1, Z2, ... Zn) se rapproche d'une tension de fin de charge individuelle de la cellule est déterminé à l'aide de l'unité de commande (BMS-C) et **en ce que**, dans ce cas, l'unité de conversion et de contrôle (IR1, IR2, ... IRn) respectivement associée est amenée à détourner de cette cellule l'énergie acheminée par le courant de base, qui devient cependant superflue après avoir atteint la tension de fin de charge individuelle de la cellule, et à la retourner dans le système global.

2. Arrangement accumulateur d'énergie selon la revendication 1, **caractérisé en ce que** les unités de conversion et de contrôle (IR1, IR2, ... IRn) à régulation libre de potentiel comprennent des convertisseurs à découpage (14, 17, 18, 19).

3. Arrangement accumulateur d'énergie selon la revendication 1 ou 2, **caractérisé en ce que** les cellules (Z1, Z2, ... Zn) s'appuient au moins partiellement sur des technologies de base différentes.

4. Arrangement accumulateur d'énergie selon l'une des revendications 1 à 3, **caractérisé en ce qu'**une unité de conversion et de contrôle (IR1, IR2, ... IRn) est à chaque fois associée à un groupe de cellules (Z1, Z2, ... Zn) du même type.

5. Arrangement accumulateur d'énergie selon l'une des revendications 1 à 4, **caractérisé en ce que** chaque unité de conversion et de contrôle (IR1, IR2, ... IRn) à régulation libre de potentiel forme, avec la cellule (Z1, Z2, ... Zn) ou le groupe de cellules respectivement associé(e), une unité structurale qui est reliée électriquement et mécaniquement à l'arrangement accumulateur d'énergie par le biais d'éléments de liaison (BMS-V) amovibles.

6. Arrangement accumulateur d'énergie selon la revendication 5, **caractérisé en ce que** les éléments de liaison (BMS-V) amovibles présents sont des connecteurs enfichables.

7. Procédé pour faire fonctionner un arrangement accumulateur d'énergie selon l'une des revendications 1 à 6, **caractérisé en ce que**
- les propriétés individuelles des cellules (Z1, Z2, ... Zn) sont déterminées dans une phase d'initialisation, et **en ce que**
- l'état actuel des cellules (Z1, Z2, ... Zn) est continuellement contrôlé pendant les opérations de charge, de décharge et de transfert de charge, et **en ce que**
- un courant de base pour le branchement en série des cellules (Z1, Z2, ... Zn) est déterminé en se basant sur la capacité de puissance de la cellule électriquement la plus faible, et **en ce que**
- la différence entre le courant de base et le courant total qui circule à la sortie de puissance (5, 6) de l'arrangement accumulateur d'énergie est mise à disposition par une mise en charge individuelle de cellules (Z1, Z2, ... Zn) individuelles en fonction de leur capacité de puissance et du besoin en puissance par une commande en conséquence des unités de conversion et de contrôle (IR1, IR2, ... IRn),
- lors d'une opération de charge, le moment auquel la tension de l'une des cellules (Z1, Z2, ... Zn) se rapproche de la tension de fin de charge individuelle de la cellule est déterminé au moyen de l'unité de commande (BMS-C) et
- dans ce cas, l'unité de conversion et de contrôle (IR1, IR2, ... IRn) respectivement associée est amenée à détourner de cette cellule l'énergie acheminée par le courant de base, qui devient cependant superflue après avoir atteint la tension de fin de charge individuelle de la cellule, et à la retourner dans le système global.

8. Procédé selon la revendication 7, **caractérisé en ce que** les propriétés actuelles et individuelles des cellules (Z1, Z2, ... Zn) déterminées pendant les opérations de charge, de décharge et de transfert de charge sont comparées à des valeurs plus anciennes mises en mémoire et des prévisions relatives au futur état des cellules sont déduites à partir de celles-ci.

9. Procédé pour faire fonctionner un arrangement accumulateur d'énergie selon la revendication 8, **caractérisé en ce que** les propriétés individuelles des cellules (Z1, Z2, ... Zn) sont interprétées du point de vue du risque d'un emballement thermique des cellules.

10. Procédé pour faire fonctionner un arrangement accumulateur d'énergie selon la revendication 7, **caractérisé en ce que** le remplacement de cellules (Z1, Z2, ... Zn) individuelles a lieu pendant le fonctionnement en cours de l'arrangement accumulateur d'énergie.

11. Procédé pour faire fonctionner un arrangement accumulateur d'énergie selon la revendication 7, **caractérisé en ce que** les propriétés actuelles et individuelles des cellules (Z1, Z2, ... Zn) déterminées pendant les opérations de charge, de décharge et de transfert de charge sont utilisées pour déterminer la capacité électrique restante de l'arrangement accumulateur d'énergie.

12. Arrangement accumulateur d'énergie selon l'une des revendications 1 à 4, **caractérisé en ce que** chaque unité de conversion et de contrôle (IR1, IR2, ... IRn) à régulation libre de potentiel possède une unité d'accumulation qui est structuralement séparée des autres composants de l'unité de conversion et de contrôle et qui forme une unité structurale avec la cellule (Z1, Z2, ... Zn) ou le groupe de cellules respectivement associé(e).
